# FASCICULE DE BREVET EUROPEEN

(11) **EP 4 180 974 B1**
(45) Date de publication et mention de la délivrance du brevet: **17.07.2024**
(21) Numéro de dépôt: 22206574.0
(22) Date de dépôt: 10.11.2022
(51) Int. Cl.: G06F 12/0864, G06F 12/14, G06F 21/79

(54) **PROCÉDÉ ET SYSTÈME DE GESTION D'UNE MÉMOIRE CACHE**
VERFAHREN UND SYSTEM ZUR VERWALTUNG EINES CACHE-SPEICHERS
METHOD AND SYSTEM FOR MANAGING CACHE

(30) Priorité: 15.11.2021 FR 2112076
(43) Date de publication de la demande: 17.05.2023
(73) Titulaire: Commissariat à l'énergie atomique et aux énergies alternatives, 75015 Paris (FR)
(72) Inventeur: EL MAJIHI, Mustapha, 38054 GRENOBLE CEDEX 9 (FR); JAAMOUM, Amine, 38054 GRENOBLE CEDEX 9 (FR); IGHILAHRIZ, Billal, 38054 GRENOBLE CEDEX 9 (FR); HISCOCK, Thomas, 38054 GRENOBLE CEDEX 9 (FR)
(74) Mandataire: Brevalex

(56) Documents cités:
- EP-A1- 3 671 470
- KR-A- 20180 114 774
- US-B2- 9 645 927
- ZHENGHONG WANG ET AL: "New cache designs for thwarting software cache-based side channel attacks", ACM SIGARCH COMPUTER ARCHITECTURE NEWS, ACM SPECIAL INTEREST GROUP ON COMPUTER ARCHITECTURE, 2 PENN PLAZA, SUITE 701 NEW YORK NY 10121-0701 USA, vol. 35, no. 2, 9 June 2007 (2007-06-09), pages 494 - 505, XP058224816, ISSN: 0163-5964, DOI: 10.1145/1273440.1250723

## Description

### Domaine technique

La présente invention concerne de manière générale le domaine de gestion des mémoires caches et, plus particulièrement, la sécurisation des mémoires caches face à des attaques par canaux auxiliaires. Elle trouve application dans le domaine de tous les dispositifs électroniques comportant des mémoires caches.

### Etat de la technique antérieure

Les mémoires caches sont très rapides mais présentent une faible capacité de stockage et servent à stocker des données temporaires. Une mémoire cache permet ainsi à un processeur d'exécuter un processus tout en réduisant son temps d'accès à des données initialement stockées dans une mémoire principale. Le terme 'processus' désigne aussi bien un programme ou logiciel exécuté par le processeur et susceptible de lire ou d'écrire dans la mémoire cache.

Le processeur cherche toujours en premier à accéder à une donnée ou une instruction dans la mémoire cache. Si la donnée recherchée ne se trouve pas dans la mémoire cache, un défaut de cache (dit, cache miss) est déclenché pour que la donnée soit chargée depuis la mémoire principale, puis gardée dans la mémoire cache pour un futur accès. En cas de succès (dit, cache hit), la mémoire principale n'est pas accédée et par conséquent, le temps d'accès est beaucoup plus rapide.

Ces variations des temps d'accès entre des caches miss et des caches hit inhérentes à ces mémoires ont été exploitées par des attaquants pour développer des attaques connues sous le terme d' « attaques par canaux auxiliaires ». Ces attaques permettent de révéler des informations secrètes traitées par un processus exécuté ou de modifier le fonctionnement du processus pour contourner des mesures de sécurité.

Les attaques par canaux auxiliaires visant la mémoire cache exploitent des fuites d'informations sur les adresses consultées à partir de divers éléments mesurables comme le temps d'accès à la mémoire ou les compteurs de performance (e.g., les nombres de caches hit et caches miss). Ces attaques micro-architecturales sont apparues très peu de temps après les attaques physiques sur les canaux auxiliaires. Elles peuvent être utilisées pour retrouver des informations secrètes, par exemple, la clé secrète utilisée par des algorithmes de chiffrement.

Un moyen classique d'attaque par canaux auxiliaires de cache implique un processus victime et un processus attaquant. Elle se compose généralement des phases de 'profiling' et 'd'exploitation'. Dans la phase de 'profiling', l'attaquant identifie des adresses dites cibles, qui sont des adresses dont les modèles d'accès peuvent divulguer des informations secrètes sur le programme de la victime. Ces adresses cibles peuvent être identifiées en analysant le programme de la victime manuellement ou avec des outils automatiques. Dans la phase d'exploitation, l'attaquant observe les accès de la victime aux adresses cibles et en déduit la valeur des informations secrètes.

Actuellement, il existe un ensemble de techniques qui sont utilisées pour attaquer les mémoires caches. Ces attaques peuvent être classées en trois catégories.

La première catégorie d'attaques est basée sur le temps, dite attaque temporelle. Dans une attaque temporelle l'attaquant mesure le temps d'exécution total de l'opération effectuée par le processus victime. La motivation de cette attaque est que le temps d'exécution varie en fonction des chemins d'exécutions parcourus ou des caches hit/miss, ce qui est souvent dû à des informations secrètes. Ces attaques temporelles nécessitent un grand nombre d'échantillons afin de réduire le bruit introduit par le système d'exploitation.

Un exemple d'une attaque temporelle est l'attaque dite 'Evict + Time' où l'attaquant cherche à savoir si le temps d'exécution de la victime est plus long dans l'absence de certains ensembles (Sets) de la mémoire cache. L'attaquant monte l'attaque en trois étapes. La première étape consiste à déclencher le processus de la victime. La deuxième étape (dite, Evict) consiste à remplir un ensemble de cache spécifique avec de données de l'attaquant. La troisième étape (dite, Time) consiste à mesurer à nouveau le temps d'exécution de la victime. Après la première exécution, les données utilisées par la victime sont mises en mémoire cache. Si l'attaquant a évincé une ou plusieurs lignes de la mémoire cache, le temps d'exécution du processus victime sera plus lent. En revanche, si les lignes évincées ne sont pas utiles, la deuxième exécution sera plus rapide. Cette technique a permis d'extraire la clé complète utilisée par l'AES.

La deuxième catégorie d'attaques est basée sur les accès. Dans ce genre d'attaques, l'attaquant surveille les motifs d'adresses accédés dans la mémoire cache pour déterminer si une instruction spécifique ou une donnée a été utilisée par le processus victime. Cette information est obtenue en mesurant le temps d'accès. Si la victime y a accédé, l'attaquant observera un cache hit, sinon, il observera un cache miss. Une attaque courant sur l'AES, basée sur l'accès, consiste à surveiller les entrées de la table de recherche lors de l'exécution de l'AES.

Un exemple d'une attaque basée sur les accès est l'attaque dite 'Prime + Probe'. L'attaquant remplit d'abord un ou plusieurs ensembles de mémoire cache avec ses propres données et détermine ensuite lesquels ont été remplacés après avoir exécuté le processus victime. En effet, l'attaque repose sur trois étapes. Lors de la première étape (dite, Prime), l'attaquant charge un ou plusieurs ensembles de la mémoire cache avec ses propres données. Lors de la deuxième étape, l'attaquant attend pendant un certain temps que le processus victime s'exécute et utilise la mémoire cache. Finalement, à la troisième étape (dite, Probe), l'attaquant mesure le temps d'accès aux mêmes données qui ont été chargées dans la mémoire cache pendant la première étape (Prime). Si l'attaquant mesure une latence plus importante en chargeant ses lignes de cache, cela veut dire que le processus victime a chargé des données correspondant aux mêmes lignes de cache utilisées par le processus attaquant. Au lieu de mesurer le temps d'exécution global comme dans l'attaque 'Evict + Time', ici l'attaquant ne mesure que sa propre durée d'exécution, ce qui est bien plus précis et rend donc l'attaque plus efficace. En revanche la correspondance entre les adresses virtuelles et physiques rend l'attaque compliquée surtout pour les mémoires cache indexées physiquement.

La troisième catégorie d'attaques est basée sur les traces. Ces attaques sont beaucoup plus puissantes puisque l'attaquant exploite une ligne spécifique de la mémoire cache. Dans ce type d'attaque, le processus attaquant et le processus victime partagent une même zone mémoire. L'attaquant obtient les traces hit/miss relatives à une entrée partagée de la mémoire cache en utilisant une instruction de maintenance de la mémoire cache pour virer la ligne concernée (par exemple, l'instruction Clflush sur les architectures x86). L'information secrète est retrouvée en se basant sur la séquence de cache hit et de cache miss.

Un exemple d'une attaque basée sur les traces est l'attaque dite 'Flush + Reload'. Cette attaque vise à exploiter la différence de temps d'accès à une ligne en fonction de sa présence dans la mémoire cache ou non. La vulnérabilité exploitée par cette attaque est par exemple, l'absence de restriction pour l'instruction « Cflush » sur les architectures du processeur INTEL x86. Cela permet à un attaquant dans un coeur processeur concurrent au coeur processeur de la victime d'éliminer de la mémoire cache une ligne de mémoire. Cette faiblesse expose le dernier niveau L3 de la mémoire cache qui est partagé entre tous les coeurs du processeur. Cette attaque repose aussi sur trois étapes. A la première étape (dite Flush) une ou plusieurs données sont évincées d'une ou de plusieurs lignes de la mémoire cache en utilisant une instruction de maintenance. Lors de la deuxième étape, l'attaquant attend pendant un certain temps que le processus victime s'exécute et utilise la mémoire cache. Finalement, à la troisième étape (dite, Reload), l'attaquant recharge la ou les donnée(s) évincée(s) en mesurant le temps d'accès sachant qu'il aurait préalablement prédéfini un seuil pour différencier entre le temps de miss et le temps de hit. Ce seuil permet à l'attaquant de savoir si la victime a accédé à la ligne ciblée ou pas.

Il existe également des variantes des attaques décrites ci-dessus. La plupart des attaques reposent sur le partage physique de cache entre les processeurs ou les coeurs. En écrivant ou en lisant de manière répétée dans le cache partagé, le processus attaquant est en mesure d'apprendre le schéma à la mémoire de la victime. Ainsi, c'est en traitant le problème au niveau de l'architecture que l'on peut aboutir à une solution optimale.

La défense la plus intuitive contre les attaques visant les mémoires caches est le partitionnement. Le concept de base est de séparer les différents processus en leur affectant des régions distinctes dans la mémoire cache, empêchant ainsi, les interférences entre un processus victime et un processus d'attaque.

Il existe des techniques de partitionnement matériel dites statiques qui consistent à créer des partitions de cache au niveau du matériel. Par ailleurs, il existe également des techniques de partitionnements logiciels basés sur la coloration du cache.

Ces techniques de partitionnement matériel et logiciel sont efficaces pour contrer les attaques par canaux auxiliaires mais avec un surcout au niveau de la dégradation de performance. Ceci dépend du nombre de partitions et peut aller jusqu'à 30% de baisse de performance.

Il existe d'autres méthodes de protection qui consistent à obscurcir l'accès à la mémoire cache par une technique de randomisation qui permet un partage complet du cache n'affectant pas ainsi, ses performances.

Un exemple de randomisation est décrit dans la demande de brevet EP3671470 de la demanderesse qui utilise une permutation légère basée sur des portes XOR pour casser le lien direct entre les adresses et leurs emplacements dans la mémoire cache. Plus particulièrement, l'architecture selon cette demande de l'art antérieur propose une forme de partitionnement dynamique en associant une valeur différente de clé à chaque processus pour faire son adressage dans la mémoire cache. Les valeurs de clé sont stockées dans une table d'historique pour ne pas dégrader les performances de la mémoire cache. Cette méthode fournit une bonne protection tout en ayant un faible impact sur les performances et un faible surcout de stockage. Toutefois, l'architecture peut être vulnérable à certaines types d'attaques de cache timing et principalement, à l'attaque 'Flush + Reload'. En outre, la méthode peut présenter un problème de cohérence de mémoire dû au fait que certaines lignes de cache non suivies peuvent être abandonnées sans qu'il y ait une réécriture 'writeback' dans la mémoire principale.

L'objet de la présente invention est de proposer un procédé et un système de gestion d'une mémoire cache remédiant aux inconvénients précités et fournissant des contremesures efficaces contre les attaques par canaux auxiliaires tout en minimisant l'impact sur les performances de la mémoire cache.

### Présentation de l'invention

La présente invention est définie par un procédé de gestion d'une mémoire cache destinée à équiper un dispositif électronique comprenant un processeur et une mémoire principale, ledit procédé comportant les étapes suivantes :
- générer une valeur aléatoire pour chaque processus d'accès à la mémoire cache,
- transformer des adresses de la mémoire cache au moyen de ladite valeur aléatoire en des adresses correspondantes, dites adresses randomisées destinées à indexer la mémoire cache,
- associer chaque valeur aléatoire correspondant à un processus d'accès, à un identifiant dudit processus d'accès formant ainsi, des couples d'identifications ayant pour fonction de partitionner dynamiquement la mémoire cache tout en répertoriant l'accès à ladite mémoire cache,
- stocker chaque couple d'identification composé d'une valeur aléatoire et d'un identifiant correspondant dans une table d'historique, et
- gérer chaque processus d'accès à la mémoire cache en fonction desdits couples d'identifications stockés dans ladite table d'historique.

Ce procédé permet de renforcer la sécurité de la mémoire cache tout en préservant une très bonne performance. En effet, le fait que l'identifiant soit ajouté dans la table d'historique et non pas dans la mémoire cache permet de minimiser le coût matériel et le temps de vérification.

Selon un premier mode de réalisation, le procédé comporte les étapes suivantes :
- recevoir une requête courante comprenant l'identifiant courant d'un processus d'accès courant et une adresse d'accès courante à la mémoire cache,
- parcourir les lignes de la table d'historique pour vérifier s'il existe un identifiant dans la table d'historique qui correspond à l'identifiant courant du processus d'accès courant,
- calculer dans le cas positif, l'adresse randomisée de ladite adresse d'accès courante en utilisant la valeur aléatoire associée à l'identifiant trouvé dans la table d'historique correspondant à l'identifiant courant,
- déclencher dans le cas négatif, un défaut de cache entrainant la génération d'une valeur aléatoire courante destinée à être associée à l'identifiant dudit processus d'accès courant pour former un couple d'identification courant, et
- stocker ledit couple d'identification courant sur une ligne libre de la table d'historique.

Ceci permet d'établir un bon compromis entre la sécurité et la performance.

Selon un deuxième mode de réalisation, le procédé comporte l'étape de stocker dans un champ de la mémoire cache, dit champ de permission, un vecteur de permission de dimension égale au nombre de lignes de la table d'historique, chaque composant dudit vecteur de permission correspondant à une et une seule ligne de ladite table d'historique et dont sa valeur indique une légitimité ou une non-légitimité du processus d'accès référencé par son identifiant stocké dans ladite ligne.

Ainsi, le champ de process ID dans la mémoire cache permet de corriger le problème d'aliasing mémoire et de partage de données.

Avantageusement, le procédé comporte les étapes suivantes :
- parcourir les lignes de la table d'historique de manière séquentielle pour calculer à chaque ligne courante, l'adresse randomisée indexant la mémoire cache à partir de la valeur aléatoire stockée dans ladite ligne courante et de l'adresse indiquée dans la requête, et
- vérifier la validité (i.e. le bit de validité et l'étiquette) de la ligne courante de la mémoire cache définie par l'adresse randomisée correspondante.

Avantageusement, le procédé comporte l'étape de déclencher un défaut de cache au cas où on arrive à la fin de la table d'historique tout en ne validant aucune ligne de la mémoire cache.

Avantageusement, le procédé comporte les étapes suivantes :
- vérifier la correspondance entre l'identifiant courant et l'identifiant appartenant au couple relatif à la ligne courante (i.e. l'itération courante), au cas où la ligne de la mémoire cache soit validée (i.e. bit de validité et d'étiquette validés),
- vérifier si l'identifiant courant existe dans la table d'historique en cas de non-correspondance entre l'identifiant courant et le dit identifiant relatif à ladite ligne courante,
- relever, la position d'un identifiant stocké dans la table d'historique si cet identifiant est égal à l'identifiant courant,
   - déclencher un cache hit si le bit de légitimité du vecteur de permission à une position correspondante à ladite position relevée dudit identifiant stocké dans la table d'historique, est valide,
- simuler le déclenchement d'un défaut de cache si le bit de légitimité à ladite position du vecteur de permission est non valide.

Ainsi, un cache hit est déclenché au cas où le processus d'accès accède à une donnée partagée existante dans la mémoire cache et à laquelle il a une légitimité d'accès. En revanche, un défaut de cache est déclenché au cas où le processus d'accès accède à une donnée partagée existante dans la mémoire cache mais à laquelle il n'a pas de légitimité. Ceci permet d'interdire le suivi d'accès que peut faire un processus attaquant sur un processus victime. En outre, ceci permet d'avoir un partage de la même donnée par plusieurs processus qui sont déjà répertoriés dans la table d'historique par leur identifiant et leurs valeurs aléatoires respectives.

Avantageusement, dans le cas où un défaut de cache est déclenché, le procédé comporte l'étape de retirer la légitimité d'un processus d'accès à une donnée partagée, sans supprimer ladite donnée partagée de la mémoire cache dans le cas où ledit processus d'accès requiert d'évincer ladite donnée partagée de la mémoire cache ou dans le cas où il quitte la table d'historique.

Ceci conserve la donnée partagée dans la mémoire cache de sorte que l'autre (ou les autres) processus d'accès partageant la même donnée puisse (ou puissent) toujours accéder à cette donnée.

Avantageusement, le procédé comporte l'étape de réécrire ladite donnée partagée dans la mémoire principale au cas où d'une part elle a été modifiée et d'autre part qu'un dernier processus d'accès ayant une légitimité à ladite donnée partagée l'évince de la mémoire cache ou quitte la table d'historique.

De cette façon, on résout la gestion de cohérence mémoire.

L'invention vise également un système de gestion d'une mémoire cache destinée à équiper un dispositif électronique comprenant un processeur et une mémoire principale, comportant :
- un module de randomisation configuré pour générer une valeur aléatoire pour chaque processus d'accès à la mémoire cache, et pour transformer des adresses de la mémoire cache au moyen de ladite valeur aléatoire en des adresses correspondantes, dites adresses randomisées destinées à indexer la mémoire cache,
- une table d'historique composée d'un nombre déterminé de lignes configurée pour y stocker sur chaque ligne un couple d'identification associant une valeur aléatoire correspondant à un processus d'accès, à un identifiant dudit processus d'accès correspondant, formant ainsi, des couples d'identifications ayant pour fonction de partitionner dynamiquement la mémoire cache tout en répertoriant l'accès à ladite mémoire cache, et
- une machine d'état configurée pour accéder à la table d'historique et pour gérer chaque processus d'accès à la mémoire cache en fonction desdits couples d'identifications stockés dans ladite table d'historique.

Avantageusement, le système comporte :
- un ensemble de registres destinés à recevoir une requête courante comprenant l'identifiant d'un processus d'accès courant et une adresse d'accès courante à la mémoire cache, et
- une machine d'état configurée pour :
- parcourir les lignes de la table d'historique pour vérifier s'il existe un identifiant dans la table d'historique qui correspond à l'identifiant courant du processus d'accès courant,
- calculer dans le cas positif, l'adresse randomisée de ladite adresse d'accès courante en utilisant la valeur aléatoire associée à l'identifiant trouvé dans la table d'historique correspondant à l'identifiant courant,
- déclencher dans le cas négatif, un défaut de cache entrainant la génération d'une valeur aléatoire courante destinée à être associée à l'identifiant dudit processus d'accès courant pour former un couple d'identification courant, et
- stocker ledit couple d'identification courant sur une ligne libre de la table d'historique.

On notera qu'il existe plusieurs types de mémoires caches comme les mémoires caches à correspondance directe, les mémoires caches associatives, et les mémoires caches associatives par ensembles. A titre d'exemple, non limitatif, la mémoire cache est subdivisée en plusieurs lignes dont chacune comporte un champ de données, une étiquette de lignes, un bit de validité, et un bit de modification.

Avantageusement, la mémoire cache comporte en outre un champ de permission du processus d'accès configuré pour y stocker un vecteur de permission de dimension égale au nombre de lignes de la table d'historique, chaque composant dudit vecteur de permission correspondant à une et une seule ligne de ladite table d'historique et dont sa valeur indique une légitimité ou une non-légitimité du processus d'accès référencé par son identifiant stocké dans ladite ligne.

Avantageusement, la machine d'état est configurée pour :
- parcourir les lignes de la table d'historique de manière séquentielle pour calculer à chaque ligne courante, l'adresse randomisée indexant la mémoire cache à partir de la valeur aléatoire stockée dans ladite ligne courante et de l'adresse indiquée dans la requête, et
- vérifier la validité (i.e. le bit de validité et l'étiquette) de la ligne courante de la mémoire cache définie par l'adresse randomisée correspondante.

Avantageusement, la machine d'état est configurée pour :
- vérifier la correspondance entre l'identifiant courant et l'identifiant appartenant au couple relatif à la ligne courante (i.e. l'itération courante), au cas où la ligne de la mémoire cache soit validée (i.e. bit de validité et d'étiquette validés),
- vérifier si l'identifiant courant existe dans la table d'historique en cas de non-correspondance entre l'identifiant courant et le dit identifiant relatif à ladite ligne courante,
- relever, la position d'un identifiant stocké dans la table d'historique si cet identifiant est égal à l'identifiant courant,
- déclencher un cache hit si le bit de légitimité du vecteur de permission à une position correspondante à ladite position relevée dudit identifiant stocké dans la table d'historique, est valide,
- simuler le déclenchement d'un défaut de cache (cache miss) si le bit de légitimité à ladite position du vecteur de permission est non valide.

L'invention vise aussi un dispositif électronique comprenant un processeur, une mémoire principale, et une mémoire cache, comportant en outre un système de gestion de la mémoire cache selon l'une quelconque des caractéristiques ci-dessus.

### Brève description des figures

[Fig. 1] illustre de manière schématique un système de gestion d'une mémoire cache, selon un mode de réalisation de l'invention ;
[Fig. 2] illustre de manière schématique une mise en oeuvre d'un système de gestion d'une mémoire cache, selon un mode de réalisation de l'invention ;
[Fig. 3] illustre de manière schématique un procédé de gestion d'une mémoire cache, selon le système mis en oeuvre à la Fig. 2 ;
[Fig. 4] illustre de manière schématique une mise en oeuvre d'un système de gestion d'une mémoire cache, selon un mode de réalisation préféré de l'invention ; et
[Fig. 5] illustre de manière schématique un procédé de gestion d'une mémoire cache, selon le système mis en oeuvre à la Fig. 4.

### Description des modes de réalisation

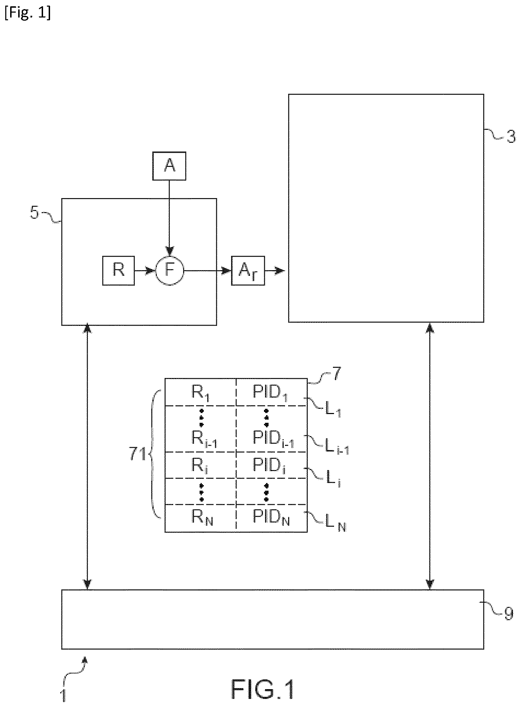

La Fig. 1 illustre de manière schématique un système de gestion d'une mémoire cache, selon un mode de réalisation de l'invention. Cette figure illustre également de manière schématique un procédé de gestion d'une mémoire cache, selon un mode de réalisation de l'invention.

Le système de gestion 1 d'une mémoire cache 3 est destinée à équiper un dispositif électronique comprenant un processeur et une mémoire principale. Ce système de gestion 1 comporte un module de randomisation 5, une table d'historique 7 et une machine d'état 9.

Le module de randomisation 5 est configuré pour générer une valeur aléatoire R pour chaque processus d'accès à la mémoire cache 3. En outre, il est configuré pour transformer des adresses de la mémoire cache 3 au moyen de la valeur aléatoire R en des adresses correspondantes, dites adresses randomisées Aᵣ (ou transformées) destinées à indexer la mémoire cache 3. A titre d'exemple, la randomisation est réalisée au moyen d'une opération F non réversible entre l'adresse initiale A et la valeur aléatoire R associée au processus d'accès.

Ainsi, l'adressage de la mémoire cache 3 avant la randomisation est différente de celle après cette randomisation. Ceci rend difficile la mise en oeuvre des attaques par canaux auxiliaires qui essaient d'obtenir des informations secrètes à partir de l'observation des accès d'un processus à cette mémoire cache 3.

La table d'historique 7 est composée d'un nombre déterminé N de lignes L₁,... ,L_{N} indexées 71 et est configurée pour stocker les valeurs aléatoires R₁,....,R_{N} correspondant aux processus d'accès ainsi que des identifiants PID₁,....,PID_{N} de ces processus d'accès. Plus particulièrement, chaque ligne indexée Lᵢ comporte un couple d'identification (Rᵢ, PIDᵢ) associant une valeur aléatoire Rᵢ à un identifiant PIDᵢ correspondant. Les couples d'identifications stockés dans la table d'historique ont pour fonction de partitionner dynamiquement la mémoire cache tout en répertoriant l'accès à la mémoire cache.

En effet, le stockage des valeurs aléatoires Rᵢ dans la table d'historique 7 permet de mémoriser les accès mémoire d'un processus d'accès après un changement de contexte. Ceci permet d'optimiser la performance car il n'est pas nécessaire de vider la mémoire cache 3 lors d'un changement de contexte.

En outre, le stockage des identifiant PIDᵢ dans la table d'historique 7 en association avec les valeurs aléatoires Rᵢ correspondant, permet le partitionnement dynamique de la mémoire cache tout en minimisant le coût matériel de ce stockage et en accélérant le temps de vérification du processus d'accès.

On notera que l'association de la valeur aléatoire Rᵢ avec un identifiant PIDᵢ correspondant ajoute une deuxième couche d'isolation dynamique. Dès lors, lorsqu'un processus victime s'exécute, il aura la même valeur aléatoire pour ses accès à la mémoire cache 3. En revanche, la valeur aléatoire d'un processus attaquant sera changée et par conséquent, sera incapable de suivre les accès du processus victime. Ceci permet de contrer les attaques de cache timing de type 'Flush + Reload'.

De plus, ceci permet de n'abandonner aucune ligne de la mémoire cache 3 sans qu'il y ait une réécriture préalable dans la mémoire principale rétablissant ainsi la cohérence entre la mémoire cache 3 et la mémoire principale.

La gestion des processus d'accès est réalisée par la machine d'état 9. En effet, la machine d'état 9 est configurée pour accéder à la table d'historique 7 et gérer chaque processus d'accès à la mémoire cache en fonction des couples d'identifications (i.e. identifiants PIDᵢ et valeurs aléatoires Rᵢ correspondant) stockés dans la table d'historique 7. Ainsi, pour les futurs accès d'un processus à la mémoire cache 3, la machine d'état 9 va parcourir la table d'historique 7 pour voir si son identifiant existe déjà dans la table 7 afin de gérer la création ou non d'une valeur aléatoire.

Ce système de gestion 1 permet ainsi de renforcer la sécurité de la mémoire cache 3 en isolant les processus tout en préservant une très bonne performance.

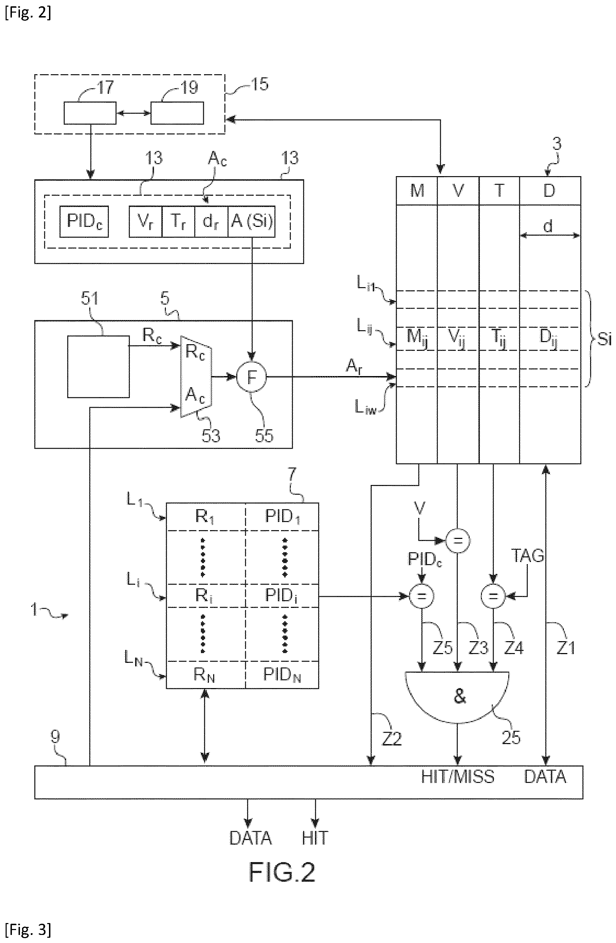

La Fig. 2 illustre de manière schématique une mise en oeuvre d'un système de gestion d'une mémoire cache, selon un mode de réalisation de l'invention.

Le système de gestion 1 de la mémoire cache 3 comporte un ensemble de registres 13, un module de randomisation 5, une table d'historique 7 et une machine d'état 9. Ce système de gestion 1 est destiné à équiper un dispositif électronique 15 comprenant un processeur 17 et une mémoire principale 19.

La mémoire cache 3 peut par exemple être de type associatif, ou associatif par ensembles, ou à correspondance directe, ou autre. D'une manière générale, la mémoire cache 3 comporte un support d'enregistrement d'informations subdivisé en plusieurs lignes Lu,..., Lᵢ₁,...., L_{iw},......, L_{nw} de longueur fixe. A titre d'exemple, et sans être exhaustif, chaque ligne Lᵢⱼ comporte un champ de données Dᵢⱼ, une étiquette de lignes Tᵢⱼ appelée 'Tag', un bit de validité Vᵢⱼ, et un bit de modification Mᵢⱼ appelé 'dirty bit'.

Par exemple, dans le cas d'une mémoire cache 3 associative, les lignes sont regroupées en ensembles distincts dits 'Sets' Si. Chaque ensemble (i.e. Set) Si contient un même nombre W de lignes Lᵢⱼ. L'indice 'i' identifie un ensemble Si parmi les autres ensembles de lignes que comporte la mémoire cache 3 et l'indice 'j' identifie une ligne particulière j de l'ensemble Si. La position de chaque ensemble Si dans la mémoire cache 3 est repérée par une adresse A=A(Si) appelée 'adresse d'ensemble de lignes' ou 'adresse du Set'.

Le champ de données Dᵢⱼ est divisé en un nombre d déterminé de mots (par e.g. d=4) de longueur fixe. On notera que les longueurs d'un mot, d'un champ et d'une ligne sont exprimées par le nombre de bits qui les composent. Par exemple, si la longueur d'un mot est égale à 32 bits, alors, un champ de données à 4 mots est de 128 bits.

L'étiquette (i.e. Tag) Tᵢⱼ contient une valeur qui permet de sélectionner la ligne Lᵢⱼ qui contient le mot recherché parmi les W lignes Lᵢⱼ de l'ensemble Si.

Le bit de validité Vᵢⱼ d'une ligne Lᵢⱼ est un bit d'information qui permet de marquer cette ligne Lᵢⱼ comme étant valide « 1 » ou invalide « 0 ». Une ligne Lᵢⱼ marquée comme invalide doit être traitée comme si elle ne contenait aucun mot. Ainsi, une ligne Lᵢⱼ marquée comme invalide est destinée à être effacée et remplacée par une autre ligne chargée depuis la mémoire principale 19.Le bit de modification (i.e. dirty bit) Mᵢⱼ relatif à une ligne Lᵢⱼ est un bit d'information qui permet de marquer cette ligne Lᵢⱼ comme ayant été modifiée. Lorsqu'une ligne Lᵢⱼ est marquée comme modifiée, et selon le type de la mémoire cache 3, le champ Dᵢⱼ qu'elle contient est pris en compte avant, par exemple, que cette ligne soit marquée comme invalide. Plus particulièrement, pour une mémoire cache 3 de type 'à écriture différée' (write back), la donnée est réécrite dans la mémoire principale uniquement quand cette ligne Lᵢⱼ de la mémoire cache 3 est surchargée ou évincée. En revanche, pour une mémoire cache 3 de type 'écriture immédiate' (write-through), la donnée est immédiatement écrite dans la mémoire principale.

L'ensemble de registres 13 est destiné à recevoir depuis le processeur 17 une requête courante 21 comprenant l'identifiant courant PID_{c} d'un processus d'accès courant et une adresse d'accès courante A_{c} à la mémoire cache 3.

Plus particulièrement, l'adresse d'accès courante A_{c} comporte une adresse A(Si) d'un ensemble Si, un indice dᵣ, et une étiquette Tᵣ. L'adresse A(Si) d'un ensemble Si de la mémoire cache 3 est l'adresse susceptible de contenir le mot à lire. L'indice dᵣ permet d'identifier la position du mot à lire dans le champ Dᵢⱼ des W lignes Lᵢ₁, ...., L_{iw} de l'ensemble Si identifié par l'adresse A(Si). L'étiquette Tᵣ permet de sélectionner, parmi l'ensemble des W lignes Lᵢ₁,...., L_{iw} de l'ensemble Si correspondant à l'adresse A(Si), la ligne Lᵢₖ qui contient le mot à lire si cette ligne existe.

On notera qu'une requête en écriture d'un mot dans la mémoire cache 3 est pratiquement identique à la requête en lecture mais elle comporte en plus une valeur numérique Vr contenant la nouvelle valeur du mot à enregistrer dans la mémoire cache 3.

Ainsi, l'ensemble de registres 13 comporte des registres dans lesquels sont enregistrées les différentes données contenues dans la requête 21 de lecture ou d'écriture.

Le module de randomisation 5 comporte un générateur 51 de valeurs aléatoires (plus précisément, pseudo aléatoires), un module multiplexeur 53 et un opérateur de randomisation 55.

Le générateur 51 est configuré pour générer des valeurs pseudo aléatoires R (dites, valeurs aléatoires), de sorte qu'une valeur aléatoire courante R_{c} est associée à chaque processus d'accès courant.

Le module multiplexeur 53 est configuré pour sélectionner soit l'utilisation d'une valeur aléatoire déjà stockée dans la table d'historique ou une nouvelle valeur aléatoire courante R_{c} générée par le générateur 51.

L'opérateur de randomisation 55 est configuré pour réaliser une opération de randomisation F entre l'adresse courante A_{c} et la valeur aléatoire courante R_{c} associée au processus d'accès. Ainsi, l'adresse courante A_{c} de la mémoire cache 3 est transformée en une adresse randomisée Ar correspondante destinée à indexer la mémoire cache : Aᵣ=F(A_{c}, R_{c}). A titre d'exemple, l'opération de randomisation F est une opération logique de type XOR.

Cette randomisation permet de mélanger les lignes de la mémoire cache 3 de sorte qu'un attaquant ne peut pas connaître quelle ligne a été accédée et par conséquent, ne peut pas suivre l'accès mémoire de sa victime.

En outre, afin de mémoriser les accès mémoire d'un processus d'accès après un changement de contexte, ces variables aléatoires sont stockées dans la table d'historique 7. Comme indiqué précédemment, la table d'historique 7 est composée d'un nombre déterminé N de lignes indexées de manière séquentielle. Chaque ligne Lᵢ comporte un couple d'identification composé d'une valeur aléatoire Rᵢ et de l'identifiant PIDᵢ d'un processus d'accès correspondant. On notera qu'une ligne Lᵢ de la table d'historique 7 est référencée par un seul indice (ici, l'indice 'i') désignant le numéro de la ligne tandis qu'une ligne Lᵢⱼ de la mémoire cache 3 est référencée par deux indices, la première 'i' identifiant l'ensemble Si et la deuxième 'j' identifiant le numéro de la ligne dans cet ensemble Si.

L'association de la valeur aléatoire Rᵢ avec un identifiant PIDᵢ correspondant présente plusieurs fonctions avantageuses. Une première est le fait qu'un processus légitime aura toujours la même valeur aléatoire pour ses accès à la mémoire cache 3 tandis qu'un processus attaquant sera changé et donc sera incapable de suivre les accès du processus victime. Une deuxième fonction est le rétablissement d'une cohérence entre la mémoire cache 3 et la mémoire principale 19 car aucune ligne de la mémoire cache 3 ne sera abandonnée avant sa réécriture dans la mémoire principale 19. Une troisième fonction est une randomisation dynamique de la mémoire cache à moindre coûts matériel et temporel.

La machine d'état 9 est reliée au module de randomisation 5, à la mémoire cache 3, et à la table d'historique 7. Par exemple, le couplage entre la machine d'état 9 et la mémoire cache 3 est réalisé au moyen de plusieurs signaux ou liens comportant un premier lien Z1 qui va dans les deux sens entre le champ de données Dᵢⱼ et la machine d'état 9, un deuxième signal Z2 qui va directement du bit de modification Mᵢⱼ vers la machine d'état 9 et deux signaux Z3 et Z4 de validité/invalidité qui vont indirectement à travers une porte logique 'ET' 25 depuis les bits de validité Vᵢⱼ et d'étiquette Tᵢⱼ respectivement vers la machine d'état 9. En outre, la porte logique 25 comporte également une autre entrée Z5 correspondant à un signal de validité/invalidité de l'identifiant PIDi stocké dans la table d'historique 7.

La machine d'état 9 est configurée pour gérer la table d'historique 7 en relation avec la mémoire cache 3. Plus particulièrement, la machine d'état 9 est configurée pour parcourir les lignes de la table d'historique 7 pour vérifier si l'identifiant courant PID_{c} du processus d'accès courant existe déjà dans cette table d'historique 7. C'est-à-dire, la machine d'état 9 vérifie s'il existe un identifiant PIDi dans la table d'historique 7 qui correspond à l'identifiant courant PIDc du processus d'accès courant.

Si l'identifiant courant PID_{c} existe déjà dans la table d'historique 7 (i.e. si on trouve un identifiant PIDi dans la table d'historique correspondant à l'identifiant courant PIDc) et si les bits de validité et d'étiquette sont valides alors, un cache de succès (i.e. cache hit) est déclenché par la machine d'état 9. Alors, la valeur aléatoire R associée à cet identifiant PIDi trouvé dans la table d'historique est utilisée pour calculer l'adresse randomisée Ar de l'adresse d'accès courante A_{c}. L'adresse randomisée Aᵣ résultant permet ensuite au processeur 17 d'accéder à la mémoire cache 3. Le déclenchement d'un cache hit est réalisé uniquement si les trois entrées Z3, Z4, Z5 de la porte logique 25 sont valides.

Dans le cas négatif, i.e., si au moins l'un des trois entrées Z3, Z4, Z5 de la porte logique 25 est invalide, alors un défaut de cache (cache miss) est déclenché par la machine d'état 9. Ce défaut de cache entraine la génération d'une valeur aléatoire courante R_{c} destinée à être associé à l'identifiant du processus d'accès courant pour former un couple d'identification courant. Ce couple d'identification courant est stocké sur une ligne d'indexation libre de la table d'historique. En outre, la valeur aléatoire courante R_{c} générée est utilisée pour randomiser l'adresse d'accès courante A_{c}.

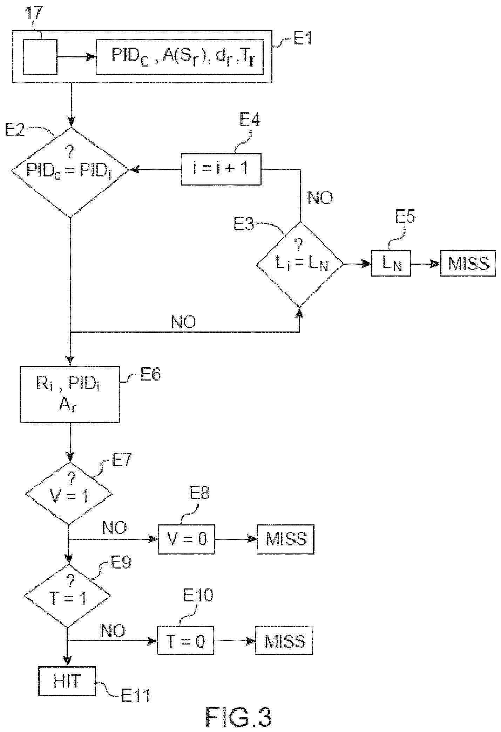

La Fig. 3 illustre de manière schématique un procédé de gestion d'une mémoire cache, selon le système mis en oeuvre à la Fig. 2.

Supposant qu'un processus courant donné X s'exécute dans le processeur 17 et veut faire un accès à la mémoire principale 19 pour par exemple, lire une donnée.

A l'étape E1, le processeur 17 établie une requête courante 21 relative au processus d'accès courant X pour interroger la mémoire cache 3. La requête 21 comporte l'identifiant courant PID_{c} du processus d'accès courant, une adresse A(Si) d'un ensemble Si, un indice dᵣ, et une étiquette Tᵣ.

Aux étapes E2-E6, après réception de la requête courante 21 par le système de gestion 1, la machine d'état 9 parcourt la table d'historique 7 de manière séquentielle pour vérifier si l'identifiant courant PID_{c} du processus d'accès courant X existe déjà dans la table d'historique 7.

Aux étapes E2-E4, la machine d'état 9 compare l'identifiant courant PID_{c} de manière itérative avec les identifiants PIDi stockés dans la table d'historique 7.

Plus particulièrement, à l'étape E2, pour une ligne indexée courante Lᵢ de la table d'historique 7, la machine d'état 9 compare l'identifiant courant PID_{c} avec l'identifiant PIDᵢ stocké dans cette ligne Lᵢ. S'il y'a une correspondance, on va à l'étape E6 et sinon, on va à l'étape E3.

L'étape E3 est un test pour vérifier si la ligne courante Lᵢ de la table d'historique 7 est la dernière L_{N} sur cette table d'historique 7. Si oui, on passe à l'étape E5. Sinon, on passe à l'étape E4 où on incrémente l'indexation de la ligne pour passer à la ligne suivante Lⱼ₊₁ et on reboucle à l'étape E2.

L'étape E5 concerne le cas où l'indexation de la ligne courante Lⱼ vérifiée à l'étape E3 est la dernière L_{N} de la table d'historique 7. Autrement dit, on arrive à la fin de la table d'historique 7 en ne trouvant aucune correspondance entre l'identifiant courant PID_{c} et les identifiants PID stockés dans la table d'historique 7. Alors, la machine d'état 9 déclenche directement un défaut de cache (i.e. cache miss).

On notera qu'à la suite du déclenchement du défaut de cache, le processeur 17 recharge la donnée dans la mémoire cache 3 depuis la mémoire principale 19. En outre, le générateur 51 génère une valeur aléatoire courante Rc pour être associée à l'identifiant courant PID_{c} du processus d'accès courant. Le couple d'identification formé par la valeur aléatoire courante Rc et l'identifiant courant PID_{c} est enregistré dans la table d'historique 7.

A l'étape E6, la machine d'état déduit que le processus d'accès courant X a déjà écrit dans la mémoire cache 3. Alors, la machine d'état 9 récupère le couple (Rᵢ, PIDᵢ) composé de l'identifiant PIDᵢ et d'une valeur aléatoire Rᵢ correspondante, stocké dans la ligne Lᵢ de la table d'historique 7, et calcule l'adresse randomisée Aᵣ indexant la mémoire cache 3.

Les étapes E7 à E10 concernent la vérification de la validité de la ligne courante de la mémoire cache 3 définie par l'adresse randomisée Aᵣ correspondante.

En effet, à l'étape E7, la machine d'état 9 vérifie le bit de validité V de la ligne indexée courante de la mémoire cache 3 définie par l'adresse randomisée Aᵣ. Si le bit n'est pas valide (par exemple, V =0), alors cette ligne L de la mémoire cache 3 est considérée comme n'étant pas encore initialisée et on passe alors, à l'étape E8 où la machine d'état 9 déclenche directement un défaut de cache (cache miss). Sinon, on passe à l'étape E9.

L'étape E9 concerne le cas où le bit de validité V vérifié à l'étape E7 est valide (i.e. V=1). Alors, la machine d'état 9 vérifie l'étiquette Tr de l'adresse avec la valeur de l'étiquette T stockée dans la ligne L de la mémoire cache 3 qui est indexée par l'adresse randomisée Aᵣ. Dans le cas d'une invalidité de l'étiquette, alors on déduit que la donnée recherchée n'est pas la bonne et on passe à l'étape E10 où la machine d'état 9 déclenche directement un défaut de cache (cache miss). Sinon, i.e. si la vérification de l'étiquette est valide, on passe à l'étape E11.

A l'étape E11 la machine d'état 9 déclenche un cache hit car les trois conditions suivantes sont satisfaites : égalité entre l'identifiant courant PIDc et un identifiant PIDi stocké dans la table (étape E2) ; validité du bit V (étape E7) ; et validité de l'étiquette T (étape E9).

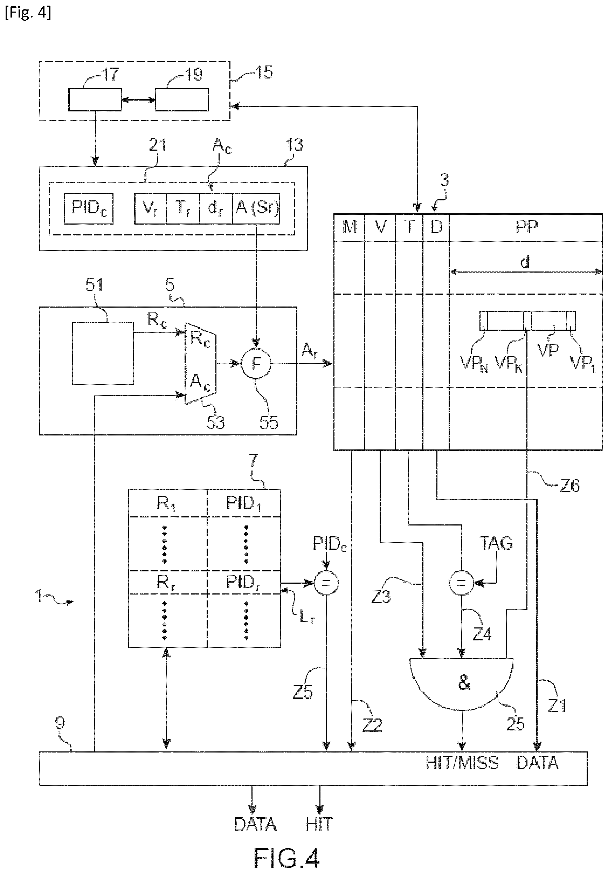

La Fig. 4 illustre de manière schématique une mise en oeuvre d'un système de gestion d'une mémoire cache, selon un mode de réalisation préféré de l'invention.

Ce système de gestion 1 a les mêmes éléments que celui de la Fig. 2 mise à part le fait que la mémoire cache 3 comporte avantageusement, un champ supplémentaire, dit champ ou processus de permission PP. Ce champ de permission PP est configuré pour stocker un vecteur de permission VP de dimension égale au nombre déterminé N de lignes de la table d'historique 7. Chaque composant VPₖ du vecteur de permission VP correspond à une et une seule ligne Lₖ de la table d'historique 7 et dont sa valeur indique une légitimité (i.e. une permission) ou une non-légitimité (i.e. non-permission) du processus d'accès référencé par son identifiant PIDₖ stocké dans cette ligne Lₖ. La valeur d'un composant VPₖ du vecteur de permission VP indique si un processus a un accès légitime ou pas à une donnée existante dans la mémoire cache 3. Si la valeur du composant VPₖ est 1 (i.e. valide), alors le processus associé à l'identifiant PIDₖ a un accès légitime à la donnée mais si la valeur du composant VPₖ est 0 (i.e. invalide) alors le processus associé à l'identifiant PIDₖ n'a pas accès à la donnée correspondante.

Selon ce mode de réalisation, la machine d'état 9 parcourt les lignes de la table d'historique 7 d'une façon séquentielle afin de calculer à chaque ligne courante, l'adresse randomisée qui va indexer la mémoire cache 3. L'adresse randomisée est calculée à partir de la valeur aléatoire Rⱼ stockée dans la ligne courante et de l'adresse A(Sr) indiquée dans la requête. En outre, la machine d'état 9 récupère à chaque ligne courante (i.e. chaque itération j), le couple d'identification (Rⱼ, PIDⱼ) composé de la valeur aléatoire Rⱼ et de l'identifiant PIDⱼ correspondant.

La machine d'état 9 vérifie également la validité de la ligne courante de la mémoire cache 3 définie par l'adresse randomisée Aᵣ. Plus particulièrement, la machine d'état 9 vérifie le bit de validité et de l'étiquette TAG de la ligne de la mémoire cache 3 définie par l'adresse randomisée Aᵣ. Lorsqu'on arrive à la fin de la table d'historique sans que la vérification du bit de validité et de l'étiquette TAG soit concluante, un cache miss est déclaré.

En revanche, si le bit de validité et de l'étiquette TAG sont valides, la machine d'état 9 vérifie la correspondance entre l'identifiant courant PIDc et l'identifiant PIDj appartenant au couple (Rⱼ, PIDⱼ) relatif à l'itération j, récupéré par la machine d'état 9. S'il y a une égalité (i.e. PIDⱼ = PID_{c}) alors, la machine d'état 9 vérifie la validité du composant VPⱼ du vecteur de permission VP. En cas de validité, référencée par la flèche Z3 allant directement dans la machine d'état 9, cette dernière déclare un cache hit et sinon, la machine d'état 9 déclenche un cache miss.

En cas de non-correspondance entre l'identifiant courant PIDc et l'identifiant PIDj, la machine d'état conclue que la donnée indexée par l'adresse randomisée est une donnée partagée et vérifie alors, si l'identifiant courant PIDc existe dans la table d'historique. S'il existe un identifiant PIDk dans la table d'historique égal à l'identifiant courant PIDc, alors, la machine d'état 9 relève la position k de l'identifiant stocké PIDₖ. La machine d'état 9 vérifie ensuite, la validité du bit de légitimité à la position k (i.e. VPₖ) du vecteur de permission VP. Si oui, un cache hit est déclenché permettant au processeur 17 d'accéder légitimement à la donnée stockée dans la mémoire cache 3 sachant que c'est une donnée déjà partagée. Sinon, la machine d'état 9 simule le déclenchement d'un défaut de cache (cache miss).

Ainsi, la porte logique 25 selon ce mode de réalisation comporte trois entrées Z3, Z4, et Z6. Les liens Z3, Z4 sont les mêmes que ceux du mode de réalisation de la Fig. 2. En revanche, l'entrée Z6 est issue du champ de permission PP. Un déclenchement d'un cache hit est réalisé si les trois entrées Z3, Z4, Z6 de la porte logique 25 sont valides. En contraste, un cache miss est déclenché si au moins l'une de ces trois entrées Z3, Z4, Z6 de la porte logique 25 est invalide. En particulier, dans le cas où le processus d'accès accède à une donnée existante dans la mémoire cache 3 mais à laquelle il n'a pas de légitimité, la machine d'état 9 déclenche un défaut de cache 'cache miss'. Autrement dit, si le bit de légitimité VPₖ (i.e. à la position k du vecteur de permission VP) associé à l'identifiant PIDₖ n'est pas valide, alors le lien Z6 signale une valeur de non-légitimité et par conséquent, un défaut de cache est déclenché par la machine d'état 9.

Ceci permet d'interdire le suivi d'accès que peut faire un processus attaquant sur un processus victime. En outre, ceci optimise la performance de la mémoire cache 3 en permettant d'avoir un partage de la même donnée par plusieurs processus qui sont déjà répertoriés dans la table d'historique 7 par leur identifiant et leurs valeurs aléatoires respectives. Autrement dit, ceci permet de ne pas avoir une même donnée partagée par plusieurs processus dans plusieurs endroits de la mémoire cache 3.

Avantageusement, dans le cas où un processus d'accès requiert d'évincer une donnée partagée de la mémoire cache 3 ou dans le cas où il quitte la table d'historique 7, la légitimité du processus d'accès à cette donnée partagée est retirée sans la supprimer de la mémoire cache 3. Ceci permet de conserver la donnée partagée dans la mémoire cache 3 de sorte que l'autre (ou les autres) processus d'accès partageant la même donnée puisse (ou puissent) toujours accéder à cette donnée.

En outre, la donnée partagée est réécrite dans la mémoire principale 19 au cas où d'une part elle a été modifiée et d'autre part qu'un dernier processus d'accès ayant une légitimité à cette donnée partagée l'évince de la mémoire cache 3 ou quitte la table d'historique 7.

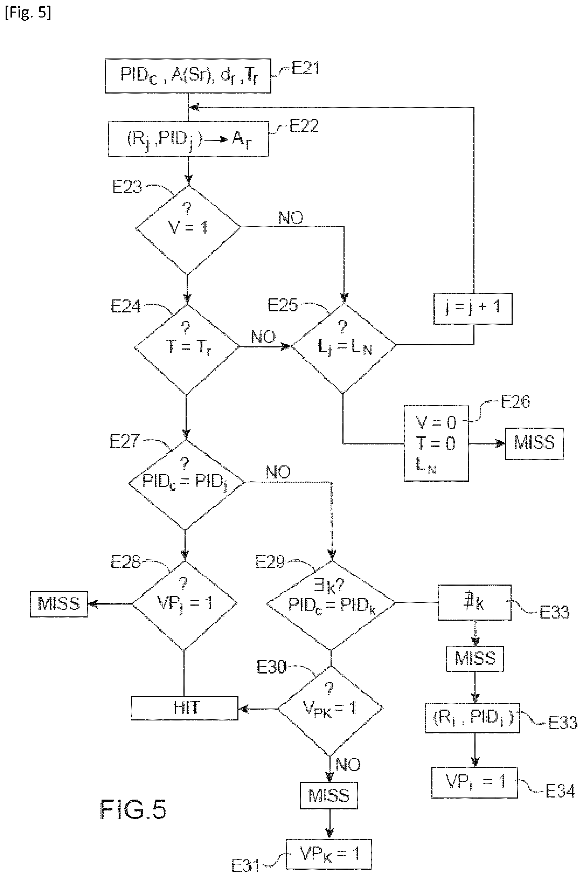

La Fig. 5 illustre de manière schématique un procédé de gestion d'une mémoire cache, selon le système mis en oeuvre à la Fig. 4.

Supposant qu'un processus courant donné X s'exécute dans le processeur 17 et veut faire un accès à la mémoire principale 19 pour par exemple, lire une donnée.

A l'étape E21, le processeur 17 établie une requête courante 21 relative au processus d'accès courant X pour interroger la mémoire cache 3. La requête 21 comporte l'identifiant courant PID_{c} du processus d'accès courant, une adresse A(Sr) d'un ensemble Sr, un indice dᵣ, et une étiquette Tᵣ.

Aux étapes E22-E25, après réception de la requête courante 21 par le système de gestion 1, la machine d'état 9 parcourt la table d'historique 7 de manière séquentielle pour calculer l'adresse randomisée qui va indexer la mémoire cache 3 et récupère à chaque itération j, le couple d'identification (Rⱼ, PIDⱼ) composé de la valeur aléatoire Rᵢ et de l'identifiant PIDⱼ correspondant.

Plus particulièrement, à l'étape E22, à l'itération j (i.e. pour une ligne indexée courante Lⱼ) de la table d'historique 7, la machine d'état 9 récupère le couple d'identification (Rⱼ, PIDⱼ) composé de la valeur aléatoire Rᵢ et de l'identifiant PIDⱼ correspondant. En outre, elle calcule l'adresse randomisée Aᵣ indexant la mémoire cache 3 à partir de la valeur aléatoire Rⱼ et de l'adresse A(Sr) indiquée dans la requête.

A l'étape E23, la machine d'état 9 vérifie le bit de validité V de la ligne de la mémoire cache 3 définie par l'adresse randomisée Aᵣ. Si ce bit n'est pas valide (par exemple, V =0), alors cette ligne L de la mémoire cache 3 est considérée comme n'étant pas encore initialisée et on passe alors, à l'étape E25. Sinon, on passe à l'étape E24.

L'étape E24 concerne le cas où le bit de validité V vérifié à l'étape E23 est valide (i.e. V=1). Alors, la machine d'état 9 vérifie l'étiquette Tr comprise dans la requête avec la valeur de l'étiquette T stockée dans la ligne L de la mémoire cache 3 qui est indexée par l'adresse randomisée Aᵣ. Dans le cas d'une invalidité de l'étiquette, alors on déduit que la donnée recherchée n'est pas la bonne et on passe alors, à l'étape E25. Sinon, i.e. si la vérification de l'étiquette est valide, on passe à l'étape E27.

L'étape E25 est un test pour vérifier si la ligne courante Lⱼ de la table d'historique 7 est la dernière L_{N} sur cette table d'historique 7. Si oui, on passe à l'étape E26. Sinon, on incrémente l'indexation de la ligne pour passer à la ligne suivante Lⱼ₊₁ et on reboucle à l'étape E22.

L'étape E26 concerne le cas où l'indexation de la ligne courante Lⱼ vérifiée à l'étape E24 est la dernière L_{N} de la table d'historique 7. Autrement dit, on arrive à la fin de la table d'historique 7 sans que la vérification du bit de validité V (étape E23) ou de l'étiquette T (étape E24) soit concluante, alors, la machine d'état 9 déclenche un défaut de cache (i.e. cache miss). Ici, le défaut de cache déclenche une requête à la mémoire principale pour récupérer la donnée qui sera écrite dans la mémoire cache. Le générateur va générer une valeur aléatoire qui va être associée à l'identifiant courant PIDc formant ainsi un nouveau couple d'identification qui sera enregistré dans la première ligne libre de la table d'historique 7. Supposons que cette ligne libre est Lₘ, alors ce couple d'identification sera indexé (Rₘ, PIDₘ).

A l'étape E27, le bit de validité V et l'étiquette T vérifiés aux étapes E23 et E24 sont valides, alors, la machine d'état 9 vérifie la correspondance entre l'identifiant courant PIDc et l'identifiant PIDj appartenant au couple d'identification (Rⱼ, PIDⱼ) relatif à la ligne d'indexation Lj (i.e. itération j), déjà récupéré par la machine d'état 9. S'il y a une égalité (i.e. PIDⱼ = PIDₑ) cela veut dire que la donnée a été chargée par ce processus courant et alors, on passe à l'étape E28. Sinon, on passe à l'étape E29.

A l'étape E28, la machine d'état 9 vérifie la validité du composant VPⱼ (i.e., à la case j) du vecteur de permission VP. En cas de validité, la machine d'état 9 déclare un cache hit et le processeur 17 possède une légitimité d'accès à la donnée stockée dans la mémoire cache 3. Sinon, la machine d'état 9 déclenche un cache miss. Cette vérification permet de respecter les notions de partage et de cohérence mémoire.

L'étape E29 concerne le cas où l'identifiant courant PIDc n'est pas égal à l'identifiant PIDj. Dans ce cas, la machine d'état 9 conclue que la donnée indexée par l'adresse randomisée est une donnée partagée entre ce processus courant et au moins un autre processus. Alors, la machine d'état 9 vérifie si l'identifiant courant PIDc existe dans la table d'historique. S'il existe un identifiant PIDk dans la table d'historique égal à l'identifiant courant PIDc, cela veut dire que le processus a déjà fait des accès à la mémoire cache et on passe à l'étape E30. Sinon, on va à l'étape E32.

L'étape E30 concerne un premier cas de figure où le processus a déjà fait des accès à la mémoire cache 3. Alors, à cette étape la machine d'état 9 relève la position k de l'identifiant PIDₖ stocké dans la table d'historique 7 et revient à la ligne de la mémoire cache 3 indexée par l'adresse randomisée pour vérifier dans le champ de permission PP si le bit de légitimité à la position k (i.e. VPₖ) du vecteur de permission VP est valide. Dans le cas positif, un cache hit est déclenché permettant au processeur 17 d'accéder légitimement à la donnée stockée dans la mémoire cache 3 sachant que c'est une donnée déjà partagée. Sinon, (i.e., dans le cas où le bit de légitimité VPₖ n'est pas valide), la machine d'état 9 simule le déclenchement d'un défaut de cache (cache miss) et ensuite, on passe à l'étape E31.

A l'étape E31, la valeur 1 est attribuée au bit de légitimité VPₖ de la position k pour autoriser l'accès futur à cette donnée partagée par le processus d'accès référencé par cet identifiant PID comme si c'est celui qui l'a chargée. Ceci permet d'empêcher le suivi d'accès d'un attaquant sur une victime.

L'étape E32 concerne un deuxième cas de figure où le processus d'accès courant fait des accès à la mémoire cache 3 pour la première fois ou que ses accès ont déjà été évincés. Cela veut dire que son identifiant PID n'est pas stocké dans la table d'historique 7. Alors, la machine d'état 9 simule un défaut de cache (cache miss) même si la donnée existe dans la mémoire cache afin d'empêcher le suivi d'accès par un processus attaquant et on va ensuite à l'étape E33.

A l'étape E33, le générateur 51 génère une valeur aléatoire Rc pour être associée à l'identifiant courant PID_{c} de ce processus d'accès courant. Le couple d'identification (R_{c}, PID_{C}) composé de cette valeur aléatoire R_{c} et l'identifiant correspondant PID_{c} est stocké à la première ligne disponible (par exemple, la position i) dans la table d'historique 7. Par exemple, si la première ligne libre est Lᵢ, alors le couple d'identification est référencé (R;, PIDᵢ). Ensuite, on passe ensuite à l'étape E34.

A l'étape E34, la machine d'état 9 valide le bit de légitimité VPᵢ à la position i dans le champ de permission PP à la ligne de la mémoire cache 3 indexée par l'adresse randomisée pour autoriser ce processus à accéder à cette donnée partagée dans le futur.

La simulation d'un cache miss est le fait de rendre la donnée disponible au processeur dans un nombre de cycles équivalent à un miss classique vu que la donnée est déjà existante dans le cache et que le processus courant n'a pas de légitimité d'accès à cette donnée. Pour ce faire on peut solliciter une requête à la mémoire principale et répondre au processeur quand la mémoire principale a fini la tâche pour éviter à choisir un nombre de cycles fixe qui ne reflète pas la réalité.

On notera que la présente invention peut s'appliquer à toutes les mémoires caches. Ainsi, le système de gestion selon la présente invention peut être mis en oeuvre dans tout dispositif électronique (par exemple, un calculateur) comprenant un processeur, une mémoire principale, et une mémoire cache.

## Revendications

1. Procédé de gestion d'une mémoire cache (3) destinée à équiper un dispositif électronique comprenant un processeur et une mémoire principale, **caractérisé en ce qu'**il comporte les étapes suivantes :
- générer une valeur aléatoire (R) pour chaque processus d'accès à la mémoire cache (3),
- transformer des adresses (A) de la mémoire cache (3) au moyen de ladite valeur aléatoire en des adresses correspondantes, dites adresses randomisées (Ar) destinées à indexer la mémoire cache (3),
- associer chaque valeur aléatoire correspondant à un processus d'accès, à un identifiant (PID) dudit processus d'accès formant ainsi, des couples d'identifications ayant pour fonction de partitionner dynamiquement la mémoire cache tout en répertoriant l'accès à ladite mémoire cache,
- stocker chaque couple d'identification composé d'une valeur aléatoire et d'un identifiant correspondant dans une table d'historique (7), et
- gérer chaque processus d'accès à la mémoire cache en fonction desdits couples d'identifications stockés dans ladite table d'historique.

2. Procédé selon la revendication 1, **caractérisé en ce qu'**il comporte les étapes suivantes :
- recevoir une requête courante comprenant l'identifiant courant (PIDc) d'un processus d'accès courant et une adresse d'accès courante (Ac) à la mémoire cache,
- parcourir les lignes de la table d'historique (7) pour vérifier s'il existe un identifiant (PIDi) dans la table d'historique qui correspond à l'identifiant courant (PIDc) du processus d'accès courant,
- calculer dans le cas positif, l'adresse randomisée (Ar) de ladite adresse d'accès courante en utilisant la valeur aléatoire associée à l'identifiant PIDi trouvé dans la table d'historique correspondant à l'identifiant courant PIDc, et
- déclencher dans le cas négatif, un défaut de cache entrainant la génération d'une valeur aléatoire courante destinée à être associée à l'identifiant dudit processus d'accès courant pour former un couple d'identification courant, et
- stocker ledit couple d'identification courant sur une ligne disponible de la table d'historique (7).

3. Procédé selon la revendication 1, **caractérisé en ce qu'**il comporte l'étape de stocker dans un champ de la mémoire cache, dit champ de permission (PP), un vecteur de permission (VP) de dimension égale au nombre de lignes de la table d'historique (7), chaque composant dudit vecteur de permission correspondant à une et une seule ligne de ladite table d'historique (7) et dont sa valeur indique une légitimité ou une non-légitimité du processus d'accès référencé par son identifiant stocké dans ladite ligne.

4. Procédé selon la revendication 3, **caractérisé en ce qu'**il comporte les étapes suivantes :
- parcourir les lignes de la table d'historique (7) de manière séquentielle pour calculer à chaque ligne courante, l'adresse randomisée indexant la mémoire cache (3) à partir de la valeur aléatoire (Rⱼ) stockée dans ladite ligne courante et de l'adresse (Ac) indiquée dans la requête, et
- vérifier la validité de la ligne courante de la mémoire cache (3) définie par l'adresse randomisée (Aᵣ) correspondante.

5. Procédé selon la revendication 4, **caractérisé en ce qu'**il comporte l'étape de déclencher un défaut de cache au cas où on arrive à la fin de la table d'historique (7) tout en ne validant aucune ligne de la mémoire cache.

6. Procédé selon la revendication 5, **caractérisé en ce qu'**il comporte les étapes suivantes :
- vérifier la correspondance entre l'identifiant courant (PIDc) et l'identifiant (PIDj) appartenant au couple (Rⱼ, PIDⱼ) relatif à la ligne courante, au cas où la ligne de la mémoire cache soit validée,
- vérifier si l'identifiant courant (PIDc) existe dans la table d'historique (7) en cas de non-correspondance entre l'identifiant courant (PIDc) et le dit identifiant (PIDj) relatif à ladite ligne courante,
- relever, la position (k) d'un identifiant (PIDk) stocké dans la table d'historique si cet identifiant (PIDk) est égal à l'identifiant courant (PIDc),
- déclencher un cache hit si le bit de légitimité du vecteur de permission VP à une position (k) correspondante à ladite position (k) relevée dudit identifiant (PIDₖ) stocké dans la table d'historique (7), est valide,
- simuler le déclenchement d'un défaut de cache si le bit de légitimité à ladite position (k) du vecteur de permission (VP) est non valide.

7. Procédé selon la revendication 6, **caractérisé en ce que** dans le cas où un défaut de cache est déclenché, ledit procédé comporte l'étape de retirer la légitimité d'un processus d'accès à une donnée partagée, sans supprimer ladite donnée partagée de la mémoire cache (3) dans le cas où ledit processus d'accès requiert d'évincer ladite donnée partagée de la mémoire cache ou dans le cas où il quitte la table d'historique (7).

8. Procédé selon la revendication 6 ou 7, **caractérisé en ce qu'**il comporte l'étape de réécrire ladite donnée partagée dans la mémoire principale (19) au cas où d'une part elle a été modifiée et d'autre part qu'un dernier processus d'accès ayant une légitimité à ladite donnée partagée l'évince de la mémoire cache (3) ou quitte la table d'historique (7).

9. Système de gestion d'une mémoire cache (3) destinée à équiper un dispositif électronique comprenant un processeur (17) et une mémoire principale (19), **caractérisé en ce que** ledit système comporte :
- un module de randomisation (5) configuré pour générer une valeur aléatoire (R) pour chaque processus d'accès à la mémoire cache (3), et pour transformer des adresses de la mémoire cache (3) au moyen de ladite valeur aléatoire en des adresses correspondantes, dites adresses randomisées (Ar) destinées à indexer la mémoire cache (3),
- une table d'historique (7) composée d'un nombre déterminé de lignes configurée pour y stocker sur chaque ligne un couple d'identification associant une valeur aléatoire correspondant à un processus d'accès, à un identifiant dudit processus d'accès correspondant, formant ainsi, des couples d'identifications ayant pour fonction de partitionner dynamiquement la mémoire cache tout en répertoriant l'accès à ladite mémoire cache, et
- une machine d'état (9) configurée pour accéder à la table d'historique (7) et pour gérer chaque processus d'accès à la mémoire cache en fonction desdits couples d'identifications stockés dans ladite table d'historique (7).

10. Système selon la revendication 9, **caractérisé en ce qu'**il comporte :
- un ensemble de registres (13) destinés à recevoir une requête courante comprenant l'identifiant d'un processus d'accès courant et une adresse d'accès courante à la mémoire cache, et
- une machine d'état (9) configurée pour :
- parcourir les lignes de la table d'historique (7) pour vérifier s'il existe un identifiant (PIDi) dans la table d'historique qui correspond à l'identifiant courant (PIDc) du processus d'accès courant,
- calculer dans le cas positif, l'adresse randomisée (Ar) de ladite adresse d'accès courante en utilisant la valeur aléatoire associée à l'identifiant (PIDi) trouvé dans la table d'historique correspondant à l'identifiant courant (PIDc), et
- déclencher dans le cas négatif, un défaut de cache entrainant la génération d'une valeur aléatoire courante destinée à être associée à l'identifiant dudit processus d'accès courant pour former un couple d'identification courant, et
- stocker ledit couple d'identification courant sur une ligne disponible de la table d'historique (7).

11. Système selon la revendication 10, **caractérisé en ce que** la mémoire cache (3) est subdivisée en plusieurs lignes dont chacune comporte un champ de permission (PP) du processus d'accès configuré pour y stocker un vecteur de permission (VP) de dimension égale au nombre de lignes de la table d'historique (7), chaque composant dudit vecteur de permission correspondant à une et une seule ligne de ladite table d'historique et dont sa valeur indique une légitimité ou une non-légitimité du processus d'accès référencé par son identifiant stocké dans ladite ligne.

12. Système selon la revendication 11, **caractérisé en ce que** la machine d'état (9) est configurée pour :
- parcourir les lignes de la table d'historique (7) de manière séquentielle pour calculer à chaque ligne courante, l'adresse randomisée indexant la mémoire cache (3) à partir de la valeur aléatoire (Rⱼ) stockée dans ladite ligne courante et de l'adresse (Ac) indiquée dans la requête, et
- vérifier la validité de la ligne courante de la mémoire cache (3) définie par l'adresse randomisée (Aᵣ) correspondante.

13. Système selon la revendication 12, **caractérisé en ce que** la machine d'état (9) est configurée pour :
- vérifier la correspondance entre l'identifiant courant (PIDc) et l'identifiant (PIDj) appartenant au couple (Rⱼ, PIDⱼ) relatif à la ligne courante (j), au cas où la ligne de la mémoire cache soit validée,
- vérifier si l'identifiant courant (PIDc) existe dans la table d'historique (7) en cas de non-correspondance entre l'identifiant courant (PIDc) et le dit identifiant (PIDj) relatif à ladite ligne courante,
- relever, la position (k) d'un identifiant (PIDk) stocké dans la table d'historique si cet identifiant (PIDk) est égal à l'identifiant courant (PIDc),
- déclencher un cache hit si le bit de légitimité du vecteur de permission (VP) à une position (k) correspondante à ladite position (k) relevée dudit identifiant (PIDₖ) stocké dans la table d'historique (7), est valide,
- simuler le déclenchement d'un défaut de cache si le bit de légitimité à ladite position (k) du vecteur de permission (VP) est non valide.

14. Dispositif électronique comprenant un processeur (17), une mémoire principale (19), et une mémoire cache (3) **caractérisé en ce qu'**il comporte en outre un système de gestion (1) de la mémoire cache (3) selon l'une quelconque des revendications 9 à 11.

## Patentansprüche

1. Verfahren zur Verwaltung eines Cache-Speichers (3), der dazu bestimmt ist, eine elektronische Vorrichtung auszurüsten, die einen Prozessor und einen Hauptspeicher umfasst, **dadurch gekennzeichnet, dass** es die folgenden Schritte beinhaltet:
- Generieren eines Zufallswerts (R) für jeden Zugriffsprozess auf den Cache-Speicher (3),
- Umwandeln von Adressen (A) des Cache-Speichers (3) mittels des Zufallswerts in entsprechende Adressen, randomisierte Adressen (Ar) genannt, die dazu bestimmt sind, den Cache-Speicher (3) zu indizieren,
- Zuordnen jedes Zufallswerts, der einem Zugriffsprozess entspricht, an einen Identifikator (PID) des Zugriffsprozesses, wodurch Identifikationspaare gebildet werden, die die Funktion haben, den Cache-Speicher dynamisch zu partitionieren und gleichzeitig den Zugriff auf den Cache-Speicher zu erfassen,
- Speichern jedes Identifikationspaares, das aus einem Zufallswert und einem entsprechenden Identifikator besteht, in einer Verlaufstabelle (7), und
- Verwalten jedes Zugriffsprozesses auf den Cache-Speicher in Abhängigkeit der Identifikationspaare, die in der Verlaufstabelle gespeichert sind.

2. Verfahren nach Anspruch 1, **dadurch gekennzeichnet, dass** es folgende Schritte beinhaltet:
- Empfangen einer aktuellen Anforderung, die den aktuellen Identifikator (PIDc) eines aktuellen Zugriffsprozesses und eine aktuelle Zugriffsadresse (Ac) für den Cache-Speicher umfasst,
- Durchlaufen der Zeilen der Verlaufstabelle (7), um zu überprüfen, ob in der Verlaufstabelle ein Identifikator (PIDi) vorhanden ist, der dem aktuellen Identifikator (PIDc) des aktuellen Zugriffsprozesses entspricht,
- Berechnen, im positiven Fall, der randomisierten Adresse (Ar) der aktuellen Zugriffsadresse unter Verwendung des Zufallswerts, der dem PIDi-Identifikator zugeordnet ist, der in der Verlaufstabelle gefunden wurde und dem aktuellen PIDc-Identifikator entspricht, und
- Auslösen, im negativen Fall, eines Cache-Fehlers, der zur Generierung eines aktuellen Zufallswerts führt, der dazu bestimmt ist, dem Identifikator des aktuellen Zugriffsprozesses zugeordnet zu werden, um ein aktuelles Identifikationspaar zu bilden, und
- Speichern des aktuellen Identifikationspaares in einer verfügbaren Zeile der Verlaufstabelle (7).

3. Verfahren nach Anspruch 1, **dadurch gekennzeichnet, dass** es den Schritt beinhaltet des Speicherns in einem Feld im Cache-Speicher, Berechtigungsfeld (PP) genannt, eines Berechtigungsvektors (VP), mit einer Größe, die gleich der Anzahl von Zeilen in der Verlaufstabelle (7) ist, wobei jede Komponente des Berechtigungsvektors einer und nur einer Zeile in der Verlaufstabelle (7) entspricht, und deren Wert eine Legitimität oder Nicht-Legitimität des Zugriffsprozesses bezeichnet, auf den durch seinen Identifikator verwiesen wird, der in der Zeile gespeichert ist.

4. Verfahren nach Anspruch 3, **dadurch gekennzeichnet, dass** es folgende Schritte beinhaltet:
- Durchlaufen der Zeilen der Verlaufstabelle (7), auf sequentielle Weise, um in jeder aktuellen Zeile die randomisierte Adresse zu berechnen, die den Cache-Speicher (3) indiziert ausgehend vom Zufallswert (Rⱼ), der in der aktuellen Zeile gespeichert ist, und von der Adresse (Ac), die in der Anforderung bezeichnet ist, und
- Überprüfen der Gültigkeit der aktuellen Zeile des Cache-Speichers (3), die durch die entsprechende randomisierte Adresse (Aᵣ) definiert ist.

5. Verfahren nach Anspruch 4, **dadurch gekennzeichnet, dass** es den Schritt des Auslösens eines Cache-Fehlers beinhaltet, für den Fall, indem das Ende der Verlaufstabelle (7) erreicht wird, ohne dass eine Zeile des Cache-Speichers für gültig erklärt worden ist.

6. Verfahren nach Anspruch 5, **dadurch gekennzeichnet, dass** es die folgenden Schritte beinhaltet:
- Überprüfen der Übereinstimmung zwischen dem aktuellen Identifikator (PIDc) und dem Identifikator (PIDj), der zum Paar (Rⱼ, PIDⱼ) gehört, das sich auf die aktuelle Zeile bezieht, für den Fall, indem die Zeile des Cache-Speichers für gültig erklärt wird,
- Überprüfen, ob der aktuelle Identifikator (PIDc) in der Verlaufstabelle (7) vorhanden ist, im Falle der Nichtübereinstimmung zwischen dem aktuellen Identifikator (PIDc) und dem Identifikator (PIDj) bezüglich der aktuellen Zeile,
- Feststellen der Position (k) eines Identifikators (PIDk), der in der Verlaufstabelle gespeichert ist, wenn dieser Identifikator (PIDk) gleich dem aktuellen Identifikator (PIDc) ist,
- Auslösen eines Cache-Treffers, wenn das Legitimitäts-Bit des Berechtigungsvektors VP an einer Position (k), die der Position (k) entspricht, die von dem in der Verlaufstabelle (7) gespeicherten Identifikator (PIDₖ) festgestellt wurde, gültig ist,
- Simulieren der Auslösung eines Cache-Fehlers, wenn das Legitimitäts-Bit an der Position (k) des Berechtigungsvektors (VP) nicht gültig ist.

7. Verfahren nach Anspruch 6, **dadurch gekennzeichnet**, das im Falle des Auslösens eines Cache-Fehlers das Verfahren den Schritt des Entzugs der Legitimität des Zugriffsprozesses auf gemeinsam genutzte Daten beinhaltet, ohne die gemeinsam genutzten Daten aus dem Cache-Speicher (3) zu löschen, im Falle, indem der Zugriffsprozess erfordert, dass die gemeinsam genutzten Daten aus dem Cache-Speicher ausgeschlossen werden, oder im Falle, indem er die Verlaufstabelle (7) verlässt.

8. Verfahren nach Anspruch 6 oder 7, **dadurch gekennzeichnet, dass** es den Schritt des erneuten Schreibens der gemeinsam genutzten Daten in den Hauptspeicher (19) beinhaltet, für den Fall, indem sie einerseits modifiziert wurden und andererseits ein letzter Zugriffsprozess, der eine Legitimität zu den gemeinsam genutzten Daten hat, sie aus dem Cache-Speicher (3) ausschließt oder die Verlaufstabelle (7) verlässt.

9. System zur Verwaltung eines Cache-Speichers (3), der dazu bestimmt ist, eine elektronische Vorrichtung auszurüsten, die einen Prozessor (17) und einen Hauptspeicher (19) umfasst, **dadurch gekennzeichnet, dass** das System beinhaltet:
- ein Randomisierungsmodul (5), das konfiguriert ist, um für jeden Zugriffsprozess auf den Cache-Speicher (3) einen Zufallswert (R) zu generieren, und um Adressen des Cache-Speichers (3) mittels des Zufallswerts in entsprechende Adressen, randomisierte Adressen (Ar) genannt, umzuwandeln, die dazu bestimmt sind, den Cache-Speicher (3) zu indizieren,
- eine Verlaufstabelle (7), die aus einer bestimmten Anzahl von Zeilen besteht, die konfiguriert ist, um darin in jeder Zeile ein Identifikationspaar zu speichern, das einen Zufallswert, der einem Zugriffsprozess entspricht, einem Identifikator des entsprechenden Zugriffsprozesses zuordnet, wodurch Identifikationspaare gebildet werden, die die Funktion haben, den Cache-Speicher dynamisch zu partitionieren und gleichzeitig den Zugriff auf den Cache-Speicher zu erfassen, und
- eine Zustandsmaschine (9), die konfiguriert ist, um auf die Verlaufstabelle (7) zuzugreifen und jeden Zugriffsprozess auf den Cache-Speicher in Abhängigkeit der Identifikationspaare, die in der Verlaufstabelle (7) gespeichert sind, zu verwalten.

10. System nach Anspruch 9, **dadurch gekennzeichnet, dass** es beinhaltet:
- eine Reihe von Registern (13), die dazu bestimmt sind, eine aktuelle Anforderung zu empfangen, die den Identifikator eines aktuellen Zugriffsprozesses umfasst und eine aktuelle Zugriffsadresse auf den Cache-Speicher, und
- eine Zustandsmaschine (9), konfiguriert zum:
- Durchlaufen der Zeilen der Verlaufstabelle (7), um zu überprüfen, ob in der Verlaufstabelle ein Identifikator (PIDi) vorhanden ist, der dem aktuellen Identifikator (PIDc) des aktuellen Zugriffsprozesses entspricht,
- Berechnen, im positiven Fall, der randomisierten Adresse (Ar) der aktuellen Zugriffsadresse unter Verwendung des Zufallswerts, der dem Identifikator (PIDi) zugeordnet ist, der in der Verlaufstabelle gefunden wurde, und dem aktuellen Identifikator (PIDc) entspricht, und
- Auslösen, im negativen Fall, eines Cache-Fehlers, der zur Generierung eines aktuellen Zufallswerts führt, der dazu bestimmt ist, dem Identifikator des aktuellen Zugriffsprozesses zugeordnet zu werden, um ein aktuelles Identifikationspaar zu bilden, und
- Speichern des aktuellen Identifikationspaares in einer verfügbaren Zeile der Verlaufstabelle (7).

11. System nach Anspruch 10, **dadurch gekennzeichnet, dass** der Cache-Speicher (3) in mehrere Zeilen unterteilt ist, von denen jede ein Berechtigungsfeld (PP) des Zugriffsprozesses beinhaltet, das konfiguriert ist, um darin einen Berechtigungsvektor (VP) zu speichern, mit einer Größe, die gleich der Anzahl von Zeilen in der Verlaufstabelle (7) ist, wobei jede Komponente des Berechtigungsvektors einer und nur einer Zeile der Verlaufstabelle entspricht, und deren Wert eine Legitimität oder Nicht-Legitimität des Zugriffsprozesses bezeichnet, auf den durch seinen Identifikator verwiesen wird, der in der Zeile gespeichert ist.

12. System nach Anspruch 11, **dadurch gekennzeichnet, dass** die Zustandsmaschine (9) konfiguriert ist zum:
- Durchlaufen der Zeilen der Verlaufstabelle (7), auf sequentielle Weise, um in jeder aktuellen Zeile die randomisierte Adresse zu berechnen, die den Cache-Speicher (3) indiziert ausgehend vom Zufallswert (Rⱼ), der in der aktuellen Zeile gespeichert ist, und von der Adresse (Ac), die in der Anforderung bezeichnet ist, und
- Überprüfen der Gültigkeit der aktuellen Zeile des Cache-Speichers (3), die durch die entsprechende randomisierte Adresse (Aᵣ) definiert ist.

13. System nach Anspruch 12, **dadurch gekennzeichnet, dass** die Zustandsmaschine (9) konfiguriert ist zum:
- Überprüfen der Übereinstimmung zwischen dem aktuellen Identifikator (PIDc) und dem Identifikator (PIDj), der zum Paar (Rⱼ, PIDⱼ) gehört, das sich auf die aktuelle Zeile (j) bezieht, für den Fall, indem die Zeile des Cache-Speichers für gültig erklärt wird,
- Überprüfen, ob der aktuelle Identifikator (PIDc) in der Verlaufstabelle (7) vorhanden ist, im Falle der Nichtübereinstimmung zwischen dem aktuellen Identifikator (PIDc) und dem Identifikator (PIDj) bezüglich der aktuellen Zeile,
- Feststellen der Position (k) eines Identifikators (PIDk), der in der Verlaufstabelle gespeichert ist, wenn dieser Identifikator (PIDk) gleich dem aktuellen Identifikator (PIDc) ist,
- Auslösen eines Cache-Treffers, wenn das Legitimitäts-Bit des Berechtigungsvektors (VP) an einer Position (k), die der Position (k) entspricht, die von dem in der Verlaufstabelle (7) gespeicherten Identifikator (PIDₖ) festgestellt wurde, gültig ist,
- Simulieren der Auslösung eines Cache-Fehlers, wenn das Legitimitäts-Bit an der Position (k) des Berechtigungsvektors (VP) nicht gültig ist.

14. Elektronische Vorrichtung, einen Prozessor (17), einen Hauptspeicher (19) und einen Cache-Speicher (3) umfassend, **dadurch gekennzeichnet, dass** sie ferner ein Verwaltungssystem (1) des Cache-Speichers (3) nach einem der Ansprüche 9 bis 11 beinhaltet.

## Claims

1. A method for managing a cache (3) intended to equip an electronic device comprising a processor and a main memory, **characterised in that** it includes the following steps:
- generating a random value (R) for each cache access process (3),
- transforming addresses (A) of the cache (3) by means of said random value into corresponding addresses, called randomised addresses (Ar) intended to index the cache (3),
- associating each random value corresponding to an access process, with an identifier (PID) of said access process thus forming, pairs of identifications having the function of dynamically partitioning the cache while listing the access to said cache,
- storing each identification pair composed of a random value and a corresponding identifier in a history table (7), and
- managing each cache access process depending on said pairs of identifications stored in said history table.

2. The method according to claim 1, **characterised in that** it includes the following steps:
- receiving a current request comprising the current identifier (PlDc) of a current access process and a current access address (Ac) to the cache,
- browsing the lines of the history table (7) to check if there is an identifier (PIDi) in the history table which corresponds to the current identifier (PIDC) of the current access process,
- calculating in the positive case, the randomised address (Ar) of said current access address using the random value associated with the identifier PIDi found in the history table corresponding to the current identifier PlDc, and
- triggering in the negative case, a cache miss leading to the generation of a current random value intended to be associated with the identifier of said current access process to form a current identification pair, and
- storing said current identification pair on an available line of the history table (7).

3. The method according to claim 1, **characterised in that** it includes the step of storing in a field of the cache, called permission field (PP), a permission vector (VP) of dimension equal to the number of lines of the history table (7), each component of said permission vector corresponding to one and only one line of said history table (7) and whose value indicates a legitimacy or a non-legitimacy of the access process referenced by its identifier stored in said line.

4. The method according to claim 3, **characterised in that** it includes the following steps:
- browsing the lines of the history table (7) in a sequential manner to calculate at each current line, the randomised address indexing the cache (3) from the random value (Rⱼ) stored in said current line and from the address (Ac) indicated in the request, and
- checking the validity of the current line of the cache (3) defined by the corresponding randomised address (Aᵣ).

5. The method according to claim 4, **characterised in that** it includes the step of triggering a cache miss in the case of reaching the end of the history table (7) while not validating any line of the cache.

6. The method according to claim 5, **characterised in that** it includes the following steps:
- checking the correspondence between the current identifier (PlDc) and the identifier (PIDj) belonging to the pair (Rⱼ, PIDⱼ) relating to the current line, in case where the cache line is validated,
- checking if the current identifier (PIDc) exists in the history table (7) in the case of a non-correspondence between the current identifier (PlDc) and said identifier (PIDj) relating to said current line,
- noting the position (k) of an identifier (PIDk) stored in the history table if this identifier (PIDk) is equal to the current identifier (PlDc),
- triggering a cache hit if the legitimacy bit of the permission vector VP at a position (k) corresponding to said position (k) recorded from said identifier (PIDk) stored in the history table (7), is valid,
- simulating the triggering of a cache miss if the legitimacy bit at said position (k) of the permission vector (VP) is invalid.

7. The method according to claim 6, **characterised in that** in the case where a cache miss is triggered, said method includes the step of removing the legitimacy of a process of access to shared data, without deleting said data shared from the cache (3) in the case where said access process requires evicting said shared data from the cache or in the case where it leaves the history table (7).

8. The method according to claim 6 or 7, **characterised in that** it includes the step of rewriting said shared data in the main memory (19) in the case where, on the one hand, it has been modified and, on the other hand, that a last access process having a legitimacy to said shared data evicts it from the cache (3) or leaves the history table (7).

9. A system for managing a cache (3) intended to equip an electronic device comprising a processor (17) and a main memory (19), **characterised in that** said system includes:
- a randomisation module (5) configured to generate a random value (R) for each cache access process (3), and to transform addresses of the cache (3) by means of said random value into corresponding addresses, called randomised addresses (Ar) intended to index the cache (3),
- a history table (7) composed of a determined number of lines configured to store therein, on each line, an identification pair associating a random value corresponding to an access process, to an identifier of said corresponding access process, thus forming pairs of identifications having the function of dynamically partitioning the cache while listing the access to said cache, and
- a state machine (9) configured to access the history table (7) and to manage each cache access process depending on said pairs of identifications stored in said history table (7).

10. The system according to claim 9, **characterised in that** it includes:
- a set of registers (13) intended to receive a current request comprising the identifier of a current access process and a current access address to the cache, and
- a state machine (9) configured to:
- browse the lines of the history table (7) to check if there is an identifier (PIDi) in the history table which corresponds to the current identifier (PlDc) of the current access process,
- calculate in the positive case, the randomised address (Ar) of said current access address using the random value associated with the identifier (PIDi) found in the history table corresponding to the current identifier (PlDc), and
- trigger in the negative case, a cache miss resulting in the generation of a current random value intended to be associated with the identifier of said current access process to form a current identification pair, and
- store said current identification pair on an available line of the history table (7).

11. The system according to claim 10, **characterised in that** the cache (3) is subdivided into several lines, each of which includes a permission field (PP) of the access process configured to store a permission vector (VP) therein, of dimension equal to the number of lines of the history table (7), each component of said permission vector corresponding to one and only one line of said history table and whose value indicates a legitimacy or a non-legitimacy of the access process referenced by its identifier stored in said line.

12. The system according to claim 11, **characterised in that** the state machine (9) is configured to:
- browse the lines of the history table (7) in a sequential manner to calculate at each current line, the randomised address indexing the cache (3) from the random value (Rⱼ) stored in said current line and from the address (Ac) indicated in the request, and
- check the validity of the current cache line (3) defined by the corresponding randomised address (Aᵣ).

13. The system according to claim 12, **characterised in that** the state machine (9) is configured to:
- check the correspondence between the current identifier (PlDc) and the identifier (PIDj) belonging to the pair (Rⱼ, PIDⱼ) relating to the current line (j), in the case where the line of the cache is validated,
- check if the current identifier (PlDc) exists in the history table (7) in the event of a non-correspondence between the current identifier (PIDC) and said identifier (PIDj) relating to said current line,
- record the position (k) of an identifier (PIDk) stored in the history table if this identifier (PIDk) is equal to the current identifier (PlDc),
- trigger a cache hit if the legitimacy bit of the permission vector (VP) at a position (k) corresponding to said position (k) recorded from said identifier (PIDk) stored in the history table (7), is valid,
- simulate the triggering of a cache miss if the legitimacy bit at said position (k) of the permission vector (VP) is invalid.

14. An electronic device comprising a processor (17), a main memory (19), and a cache (3) **characterised in that** it further includes a system (1) for managing the cache (3) according to any one of claims 9 to 11.
